# EUROPEAN PATENT APPLICATION

(11) **EP 2 583 749 A1**
(43) Date of publication of application: **24.04.2013**
(21) Application number: 11795221.8
(22) Date of filing: 14.04.2011
(51) Int. Cl.: B01F 7/16, G05D 23/19

(54) **MOTOR-DRIVEN COOKTOP AND COOKING CONTAINER THAT CAN BE USED ON SAID COOKTOP**

(30) Priority: 18.06.2010 ES 201000802
(71) Applicant: Electrodomesticos Taurus S.L., 25790 Oliana (Lleida) (ES)
(72) Inventor: ALET VIDAL, Josep, E-25790 Oliana (Lleida) (ES); TRENCH ROCA, Lluis, E-25790 Oliana (Lleida) (ES)
(74) Representative: Juncosa Miro, Jaime
(86) International application number: PCT/ES2011/000117
(87) International publication number: WO 2011/157865

(57) **Abstract**

The cooking hob (1) comprises a continuous glass or glass ceramic support plate (2) which has a treatment area (4) capable of supporting a cooking vessel (50) provided with rotary blades (53) connected to an upper magnetic coupling member (54). A drive motor (6) operatively connected for rotating a lower magnetic coupling member (5) located below the treatment area (4) is arranged below said support plate (2). The cooking hob (1) and the cooking vessel (50) comprise respective components of detection means for detecting an angular position change of the cooking vessel (50) in relation to the treatment area (4) and control means (30) configured for modifying or stopping the operation of the drive motor (6) when said angular position change is detected.

## Description

### Field of the Art

The present invention relates to a motorised cooking hob provided with driving means for driving rotary blades installed inside a cooking vessel supported on a continuous glass or glass ceramic support plate by means of magnetic coupling device through said support plate. The present invention also relates to a cooking vessel suitable for being used with said cooking hob.

### Background of the Invention

Patent US-A-5549382 describes a cooking hob provided with a support plate having several cooking areas, in each of which a cooking vessel can be supported. The hob includes heating means associated with each cooking area and driving means aligned with one of the cooking areas. The driving means comprise a lower magnetic coupling member driven by a motor for rotating below the support plate in a position close enough to it to magnetically transmit torque to an upper magnetic coupling member attached to a stirrer located inside a cooking vessel placed in the corresponding cooking area.

Document DE-A-1131372 discloses a cooking hob comprising a magnetic coupling between a motorised driving device and rotary blades installed inside a vessel. The magnetic coupling is established through a support plate on which the vessel rests.

Patent application DE-A-102006052475 discloses a cooking hob provided with a glass or glass ceramic support plate having several cooking areas associated with heating means and a magnetic coupling driven to rotate a stirrer inside a vessel placed on one of the cooking areas through the support plate.

A drawback of these cooking hobs equipped with a substantially smooth support plate, driving means and magnetic coupling through the support plate is that if for any reason the rotary blades increase resistance to rotation or are locked inside the vessel, then the entire vessel tends to rotate on the support plate pushed by the driving means with the risk of ruining the culinary preparation inside the vessel and scratching the support plate.

Documents DE-A-3000593, DE-A-3836099, EP-A-0725556, WO-A-9631739, US-A-4587406 describe different wireless communication systems for communicating between a cooking vessel placed on a cooking area with electric heating means of a cooking hob and the cooking hob for the purpose of transmitting data relating to the cooking conditions, especially the temperature in the vessel, and controlling the electric heating means according to the data received from the vessel by means of a control device. However, the transmitted data, for example the temperature, are scalar magnitudes which do not depend on the angular position of the vessel with respect to the treatment area of the cooking hob, and accordingly are not useful for detecting a change in said angular position, which would be indicative of a rotation of the vessel.

An advantage of the cooking hobs provided with a continuous glass or glass ceramic support plate is that the support plate has a very easy to clean smooth and completely cleared upper surface. Nevertheless, this smooth and cleared surface offers very little resistance to rotation of the vessel, for example, in the event that an increase in the resistance to rotation or a locking of the rotary blades occurs inside the vessel caused by the conditions of the food being processed.

### Disclosure of the invention

The present invention contributes to solving the aforementioned and other drawbacks providing a motorised cooking hob and a cooking vessel usable with said hob including detection means configured for detecting an angular position change of the cooking vessel in relation to a treatment area of the cooking hob and cooperating with control means for modifying or stopping the operation of said drive motor when said angular position change of the cooking vessel is detected.

According to a first aspect, the present invention provides a motorised cooking hob comprising a continuous glass or glass ceramic support plate which has a treatment area capable of supporting a cooking vessel provided with rotary blades connected to an upper magnetic coupling member, a lower magnetic coupling member rotatably arranged in said treatment area below said support plate, and a drive motor operatively connected for rotating said lower magnetic coupling member. The cooking hob further comprises one or more components of the mentioned detection means.

According to a second aspect, the present invention provides a cooking vessel usable with a motorised cooking hob, for example with a motorised cooking hob according to first aspect of the present invention. The cooking vessel comprises a vessel wall that can be supported in a treatment area of a continuous glass or glass ceramic support plate of said cooking hob, which is provided with a lower magnetic coupling member rotatably arranged in said treatment area below the support plate, and a drive motor operatively connected for rotating said lower magnetic coupling member, and rotary blades installed inside said vessel wall and connected to an upper magnetic coupling member. The cooking vessel further comprises one or more components forming part of said detection means.

The components of the detection means included in the cooking hob comprise a wave receiver arranged for receiving waves emitted or reflected from the cooking vessel. Preferably, the mentioned wave receiver is arranged for receiving waves emitted or reflected from an appendage of the cooking vessel, such as for example a handle fixed to the vessel wall, when the cooking vessel is in a predetermined angular position on the treatment area.

In one embodiment, the cooking hob further comprises a wave emitter arranged for emitting waves directed towards said appendage of the cooking vessel when the cooking vessel is in a predetermined angular position on the treatment area, and the cooking vessel includes a wave reflector arranged in said appendage to reflect the waves emitted from said wave emitter arranged in the cooking hob and redirect said waves towards the wave receiver arranged in the cooking hob when the cooking vessel is in a predetermined angular position on the treatment area.

Advantageously, the support plate comprises a first graphical indication representative of the treatment area and a second graphical indication representative of said predetermined angular position for the appendage of the cooking vessel with respect to the treatment area. To use cooking vessel with the cooking hob it is necessary to place the cooking vessel on the support plate in an operative position in which the vessel wall is centred in the first graphical indication representative of the treatment area and in an angular position such that the appendage is placed on said second graphical indication representative of the predetermined angular position.

In the operative position, the one or more components of the detection means included in the cooking hob cooperate with the one or more components of the detection means included in the cooking vessel and with the control means to allow the operation of the magnetic coupling drive motor of the cooking hob. The cooking hob can only be operated if the cooking vessel is placed on it in the operative position. The cooking hob can optionally comprise heating means associated with the treatment area, in which case, the control means can be further configured for allowing the operation of said heating means only if the cooking vessel is placed on the cooking hob in the operative position.

The detection means and/or the control means are preferably configured for allowing a tolerance range of ±10°, and more preferably of ±3°, between a real angular position and the predetermined angular position of the appendage of the cooking vessel with respect to the treatment area.

If for any reason during the operation of the cooking hob, including for example an increase in the resistance to rotation or a locking in the rotary blades inside the vessel caused by the conditions of the food being processed, the cooking vessel placed in the operative position on the treatment area rotates with respect to the rotating shaft of the magnetic coupling and accordingly with respect to the treatment area, then the appendage will vary its angular position and the wave reflector will stop reflecting the waves emitted by the wave emitter towards the wave receiver, and at the time in which it stops receiving the reflected waves it will emit a signal representative of the detection of a variation in the angular position of the cooking vessel in relation to the treatment area, as a result of which the control means will modify or stop the operation of the drive motor of the magnetic coupling, and if there are heating means associated with the treatment area, they will be able to modify or stop the operation of the heating means.

The modification of the operation of the drive motor can include, for example, reducing the rotation speed and/or reversing the rotation direction one or more times, as an alternative to stopping it. The modification of the heating means can comprise, for example, reducing the energy transmitted, as an alternative to stopping it. The cooking hob can optionally include a warning device for warning by means of visual and/or acoustic signals, such that the control means start said warning device at the same time as modifying or stopping the operation of the cooking hob as a result of detecting a change in the angular position of the cooking vessel with respect to the treatment area.

The waves used by the wave emitter, reflector and receiver are preferably light waves, and more preferably infrared light waves, although laser light waves can also be used. Alternatively, the waves used can be radio frequency waves or another type of waves.

In another embodiment, the component of the detection means included in the cooking hob comprises a proximity sensor arranged for detecting a detectable element of the cooking vessel when the cooking vessel is in a predetermined angular position on the treatment area. The mentioned proximity sensor arranged in the cooking hob preferably comprises a Hall effect sensor and said detectable element is a permanent magnet housed in an appendage of the cooking vessel in a position close enough to the support plate to be detected by said Hall effect sensor.

When the cooking vessel is placed in an operative position on the treatment area of the support plate of the cooking hob, the Hall effect sensor detects the magnetic field of the permanent magnet and the control means allow driving the magnetic coupling and activating the heating means, if there are any. If during operation the cooking vessel suffers a change in its angular position with respect to the treatment area, the Hall effect sensor stops detecting the magnetic field of the permanent magnet and emits a signal representative of the detection of a variation in the angular position of the cooking vessel in relation to the treatment area, as a result of which the control means will modify or stop the operation of the magnetic coupling drive motor and will modify or stop the operation of the heating means, if there are any.

In yet another embodiment, the cooking vessel comprises a wave emitter arranged in the appendage to emit waves directed towards a wave receiver located in the cooking hob when the cooking vessel is in a predetermined angular position on the treatment area, and the cooking vessel includes an energy storage device configured and arranged for supplying electric current to said wave emitter. This energy storage device can include one or more disposable or rechargeable batteries, or alternatively the cooking vessel can have a photovoltaic cell exposed to light and connected for charging said energy storage device.

In this embodiment, the waves used by the wave emitter, reflector and receiver are also preferably light waves, and more preferably infrared light waves, although laser light waves can also be used. Alternatively, the waves used can be radio frequency waves or of another type of waves.

In a variant of this embodiment, the cooking vessel includes a photovoltaic cell exposed to ambient light and connected for charging an energy storage device, such as, for example a rechargeable battery or an ultracapacitor, which in turn is configured and arranged for supplying electric current to said wave emitter.

In another alternative variant of this embodiment, the cooking hob comprises an energy emitting device and the cooking vessel comprises an energy receiving device configured and arranged for receiving energy wirelessly emitted by said energy emitter, converting said energy received into electric current, and supplying said electric current to the wave emitter installed in the cooking vessel.

### Brief description of the Drawings

The foregoing and other features and advantages will be better understood from the following detailed description of several embodiments in reference to the attached drawings, in which:
Fig. 1 is a partial cross-section side view of a cooking hob and a cooking vessel according to a first embodiment of the present invention in an operative position;
Fig. 2 is a plan view of a support plate of the cooking hob of Fig. 1;
Fig. 3 is a partial cross-section side view of a cooking hob and a cooking vessel according to a second embodiment of the present invention in an operative position;
Fig. 4 is a partial cross-section side view of a cooking hob and a cooking vessel according to a third embodiment of the present invention in an operative position;
Fig. 5 is a partial cross-section side view of a cooking hob and a cooking vessel according to a variant of the third embodiment of the present invention in an operative position; and
Fig. 6 is a partial cross-section side view of a cooking hob and a cooking vessel according to another variant of the third embodiment of the present invention in an operative position.

### Detailed Description of Exemplary Embodiments

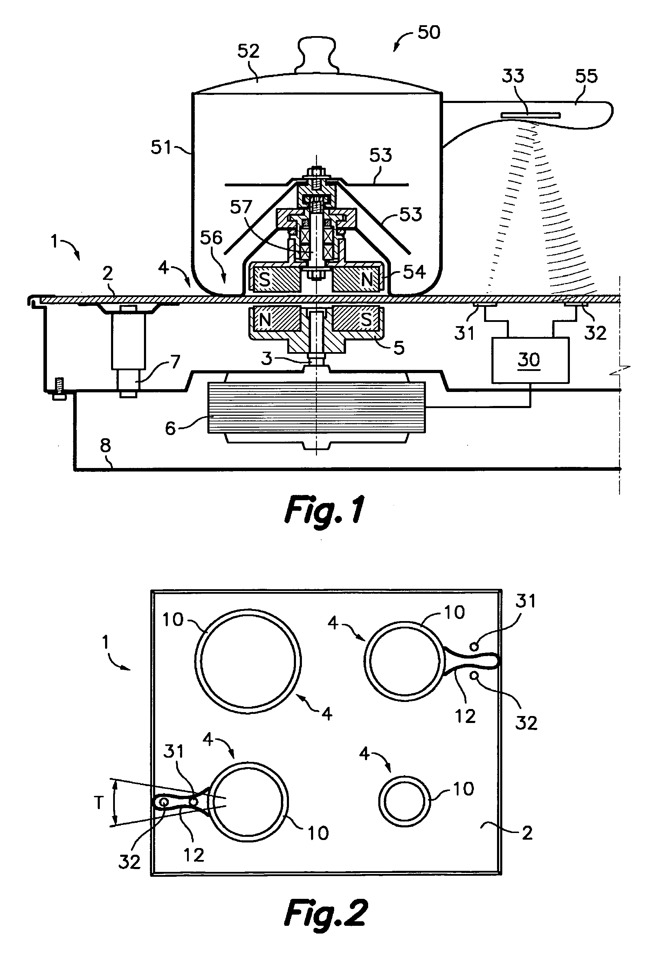

Referring first to Fig. 1, there is shown a motorised cooking hob 1 according to a first embodiment of a first aspect of the present invention and a cooking vessel 50 according to a corresponding first embodiment of a second aspect of the present invention.

The mentioned cooking hob 1 comprises a continuous glass or glass ceramic support plate 2 which has a treatment area 4 capable of supporting the mentioned cooking vessel 50, and a lower magnetic coupling member 5 connected to a drive shaft 3 rotatably supported in said treatment area 4, below the support plate 2. A drive motor 6 is operatively connected for rotating said lower magnetic coupling member 5 under the control of control means 30. In the illustrated embodiment, the drive motor 6 is directly connected to the drive shaft 3, although there can alternatively be mechanical transmission between the drive motor 6 and the drive shaft 3.

The support plate 2 of the cooking hob 1 can optionally be supported on a base structure 8 by weighing means, which can include for example one or more weight transducers 7 in connection with said control means 30.

The cooking vessel 50 comprises a vessel wall 51 and rotary blades 53 installed inside said vessel wall 51 and connected to an upper magnetic coupling member 54 by means of a blade shaft 57. In the illustrated embodiment, the upper magnetic coupling member 54 is outside the cooking vessel 50, housed in a dome formed in a bottom 56 of the vessel wall 51 and the blade shaft 57 passes through a conveniently sealed opening formed in said bottom 56 of the vessel wall 51, although the upper magnetic coupling member 54 could alternatively be inside the vessel wall 51 close to the bottom 56. The cooking vessel 50 usually includes one or more handles 55 and a lid 52.

In the operative position shown in Fig. 1, the blade shaft 57 is aligned with the drive shaft 16 and the lower and upper magnetic coupling members 5, 54 are facing opposite sides of the support plate 2 and close enough to the support plate so as to magnetically transmit the torque imparted by the drive motor 6 to the rotary blades 53 through the support plate 2.

According to the present invention, both the cooking hob 1 and the cooking vessel 50 include one or more components of detection means configured for detecting an angular position change of the cooking vessel 50 in relation to the treatment area 4, and the control means 30 cooperate with said detection means for modifying or stopping the operation of the drive motor 6 when the mentioned angular position change of the cooking vessel 50 is detected.

In the first embodiment shown in Fig. 1, the components of the detection means included in the cooking hob 1 comprise a wave emitter 31 and a wave receiver 32 located adjacent to a lower surface of the support plate 2, which is transparent to the type of waves used by said wave emitter and receiver 31, 32, while the component of the detection means included in the cooking vessel 50 is a wave reflector 33 preferably arranged in an appendage of the cooking vessel 50, such as for example the mentioned handle 55, or in one of the handles if there is more than one, in a position facing the support plate 2 when the cooking vessel 50 is placed on it.

The wave emitter 31 is arranged for emitting waves directed towards the wave reflector 33 located in the handle 55 of the cooking vessel 50 when the cooking vessel 50 is in a predetermined angular position on the treatment area 4. The wave reflector 33 is arranged for reflecting the waves emitted from the wave emitter 31 and redirecting them towards the wave receiver 32 arranged in the cooking hob 1 when the cooking vessel 50 is in the mentioned predetermined angular position on the treatment area 4. The wave emitter 31 and the wave receiver 32 are in connection with the control means 30.

Fig. 2 shows a plan view of the cooking hob 1 of Fig. 1, the support plate 2 of which includes, in the depicted example, four treatment areas 4, two of which (located at the lower left and upper right ends of Fig. 2) are associated with respective motorised magnetic couplings, while the other two are cooking areas associated for example with heating means (not shown). The two treatment areas 4 associated with the motorised magnetic couplings can also optionally be associated with heating means (not shown).

The support plate 2 comprises first graphical indications 10 representative of the treatment areas 4 and second graphical indications 12 representative of the predetermined angular position which the handle 55 of the cooking vessel 50 must adopt with respect to the two treatment areas 4 associated with the motorised magnetic couplings. In the treatment area 4 located at the lower left end of Fig. 2, the wave emitter 31 and the wave receiver 32 are located inside the second graphical indication 12 and aligned in a radial direction with respect to the first graphical indication 10, while in the treatment area 4 located at the upper right end of Fig. 2, the wave emitter 31 and the wave receiver 32 are located outside the second graphical indication 12 and on opposite sides thereof.

It will be understood that many other alternative arrangements of the wave emitter 31 and of the wave receiver 32 are possible in relation to the second graphical indication 12 provided that they are suitable for emitting waves directed towards the wave reflector 33 located in the handle 55 of the cooking vessel 50 and for receiving the waves reflected from it. The number and the type of treatment areas 4 can also vary, as can their arrangement in the support plate 2. The first and second graphical indications 10, 12 shown in Fig. 2 are also applicable to the second and third embodiments described below. Likewise, in any of the embodiments, the detection means and/or control means 30 are configured for preferably allowing a tolerance range T of ±10°, and more preferably of ±3°, between a real angular position and said predetermined angular position, indicated by means of the second graphical indication 12, of the handle 55 or another appendage of the cooking vessel 50 with respect to the treatment area 4.

In order to use the cooking vessel 50 with the cooking hob 1, it is necessary to first place the cooking vessel on the corresponding treatment area 4 approximately centring the vessel wall 51 in relation to the first graphical indication 10 and placing the handle 55 inside the tolerance range T in the predetermined angular position indicated by means of the second graphical indication 12. Then, the wave receiver 32 can receive the waves emitted by the wave emitter 31 and reflected by the wave reflector 33. If during operation the cooking vessel 50 suffers an angular position change due for example to an increase in the resistance to rotation or blocking of the rotary blades 53 inside the vessel wall 51 caused by the conditions of the food which is being processed, or by any another cause, the wave reflector 33 will move and the wave receiver 32 will stop receiving the waves emitted by the wave emitter 31. Then, the control means 30 will modify or stop the operation of the drive motor 6 and will optionally modify or stop the operation of the heating means, if there are any.

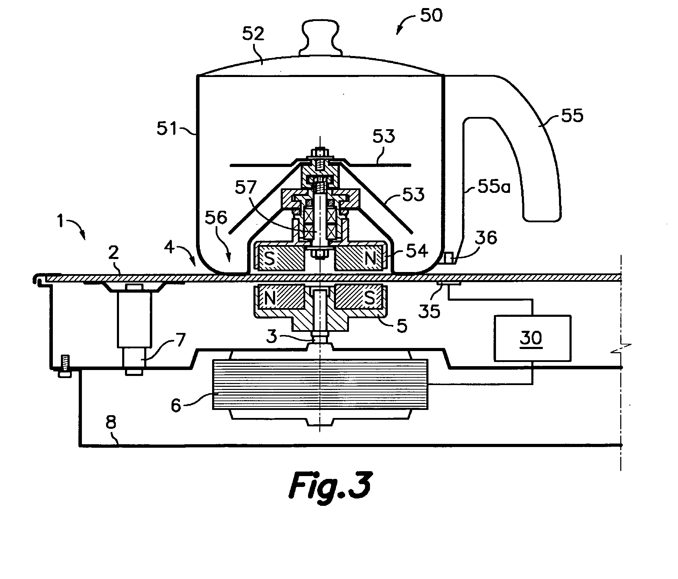

Fig. 3 shows a second embodiment of the cooking hob 1 and of the cooking vessel 50 of the present invention, which is similar in every way to the first embodiment described above in relation to Fig. 1 except in the components of the detection means. Here the component of the detection means included in the cooking hob 1 is a proximity sensor, such as for example a Hall effect sensor 35 located adjacent to a lower surface of the support plate 2 and the component of the detection means included in the cooking vessel 50 is an element detectable by said proximity sensor, such as for example a permanent magnet 36, housed in an appendage of the cooking vessel 50.

In the second embodiment of Fig. 3, the mentioned appendage is a fixing portion 55a of a handle 55, extending adjacent to an outer surface of the vessel wall 51 until close to the bottom 56 thereof, although it could alternatively be any other appendage fixed or formed in the vessel wall 51. The permanent magnet 36 is located at a lower end of said fixing portion 55a of the handle 55, such that when the cooking vessel is placed on the support plate 2, the permanent magnet 36 is close enough to the support plate 2 to be detected by the Hall effect sensor 35 arranged below it.

The Hall effect sensor 35 is arranged in a position suitable for detecting the permanent magnet 36 housed in the appendage 55 of the cooking vessel 50 when the cooking vessel 50 is in a predetermined angular position on the treatment area 4, said predetermined angular position being indicated in the support plate 2 by means of a second graphical indication 12 similar to those shown in Fig. 2. If the Hall effect sensor 35 detects the magnetic field of the permanent magnet 36, the control means 30 allow the normal operation of the drive motor 6 and of the heating means, if there are any. If the permanent magnet 36 stops detecting the magnetic field of the permanent magnet 36 due to an angular position change of the cooking vessel 50 in relation to the treatment area 4, the control means 30 modify or stop the operation of the drive motor 6 and optionally modify or stop the operation of the heating means, if there are any.

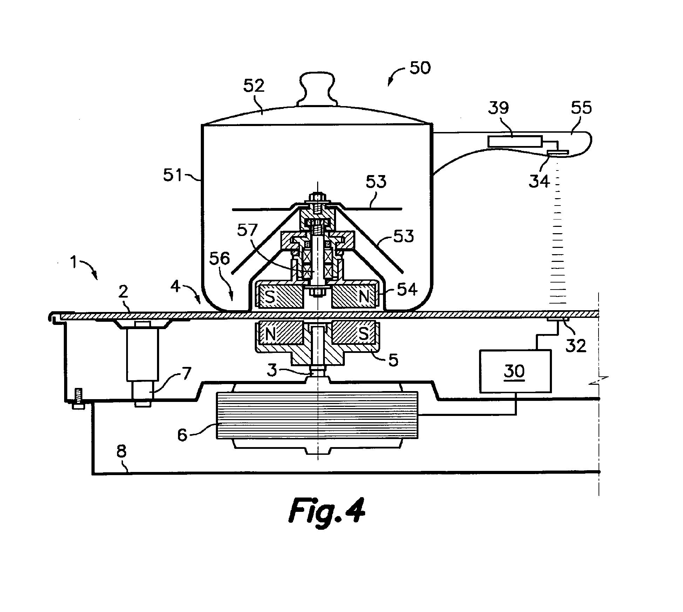

Fig. 4 shows a third embodiment of the cooking hob 1 and of the cooking vessel 50 of the present invention, which is similar in every way to the first embodiment described above in relation to Fig. 1 except in the components of the detection means. Here the component of the detection means included in the cooking vessel 50 is a wave emitter 34 arranged in an appendage of the cooking vessel 50, such as a handle 55 or any other appendage fixed or formed in the vessel wall 51, for emitting waves directed towards the support plate 2 when the cooking vessel 50 is placed on it, and the component of the detection means included in the cooking hob 1 is a wave receiver 32 located adjacent to a lower surface of the support plate 2 in the cooking hob 1.

When the cooking vessel 50 is in a predetermined angular position on the treatment area 4 of the support plate 2, the wave emitter 34 is located for directing the waves towards the wave receiver 32. The treatment area 4 and the predetermined angular position will be indicated in the support plate 2 by means of first and second graphical indications 10, 12, similar to those shown in Fig. 2. If the wave receiver 32 receives waves from the wave emitter 34, the control means 30 allow the normal operation of the drive motor 6 and of the heating means, if there are any. If due to an angular position change of the cooking vessel 50 in relation to the treatment area 4 the wave receiver 32 stops receiving waves from the wave emitter 34, the control means 30 modify or stop the operation of the drive motor 6 and optionally modify or stop the operation of the heating means, if there are any.

In the third embodiment shown in Fig. 4, an energy storage device 39 connected for supplying electric current to the wave emitter 34 is housed inside the handle 55 of the cooking vessel 50. The mentioned energy storage device 39 can comprise, for example, one or more disposable batteries or preferably one or more rechargeable batteries.

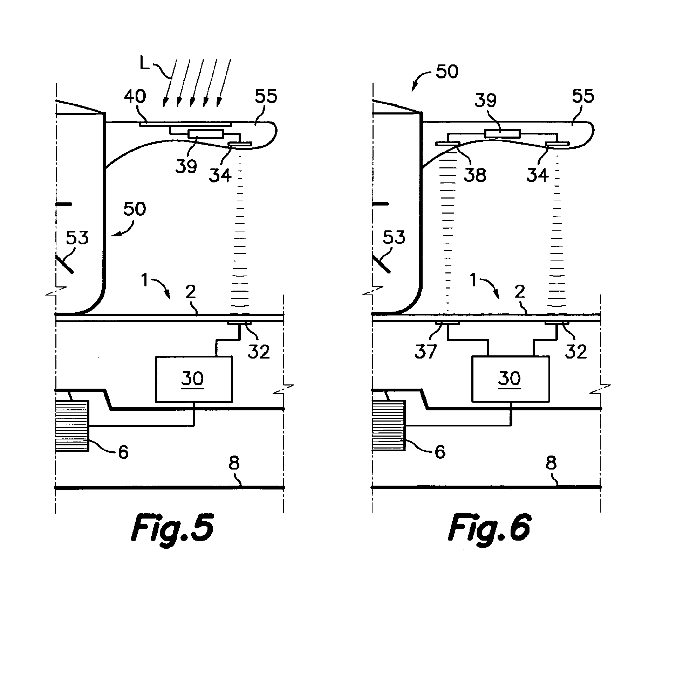

Fig. 5 shows a variant of the third embodiment, where the cooking vessel 50 comprises, for example in an upper region of the handle 55, a photovoltaic cell 41 exposed to ambient light L and connected for charging an energy storage device 39, such as, for example a rechargeable battery or an ultracapacitor, which in turn is configured and arranged for supplying electric current to said wave emitter 34.

Fig. 6 shows another variant of the third embodiment, where the cooking hob 1 comprises an energy emitting device 37 and the cooking vessel 50 comprises an energy receiving device 38 configured and arranged for receiving energy wirelessly emitted by said energy emitter device 37. The energy received by the mentioned energy receiving device 38 is converted into electric current for supplying said wave emitter 34. In Fig. 6, the energy receiving device 38 is housed in the same handle 55 as the wave emitter 34, although it could alternatively be arranged in any other appendage of the cooking vessel 55.

A person skilled in that art will envisage modifications and variations from the embodiments shown and described without departing from the scope of the present invention as it is defmed in the attached claims.

## Claims

1. A motorised cooking hob (1), of the type comprising:
a continuous glass or glass ceramic support plate (2) which has a treatment area (4) capable of supporting a cooking vessel (50) provided with rotary blades (53) connected to an upper magnetic coupling member (54);
a lower magnetic coupling member (5) rotatably arranged in said treatment area (4) below said support plate (2); and
a drive motor (6) operatively connected for rotating said lower magnetic coupling member (5),
**characterised in that** the cooking hob (1) further comprises at least one component of detection means configured for detecting an angular position change of the cooking vessel (50) in relation to the treatment area (4) and cooperating with control means (30) for modifying or stopping the operation of said drive motor (6) when said angular position change of the cooking vessel (50) is detected.

2. The hob according to claim 1, **characterised in that** said component of said detection means comprises a wave receiver (32) arranged for receiving waves emitted or reflected from the cooking vessel (50).

3. The hob according to claim 2, **characterised in that** said wave receiver (32) is arranged for receiving waves emitted or reflected from an appendage (55) of the cooking vessel (50) when the cooking vessel (50) is in a predetermined angular position on the treatment area (4).

4. The hob according to claim 3, **characterised in that** it further comprises a wave emitter (31) arranged for emitting waves directed towards a wave reflector (33) located in said appendage (55) of the cooking vessel (50) when the cooking vessel (50) is in a predetermined angular position on the treatment area (4).

5. The hob according to claim 1, **characterised in that** said component of said detection means comprises a proximity sensor arranged for detecting a detectable element of the cooking vessel (50) when the cooking vessel (50) is in a predetermined angular position on the treatment area (4).

6. The hob according to claim 5, **characterised in that** said proximity sensor comprises a Hall effect sensor (35) arranged for detecting a permanent magnet (36) housed in an appendage (55) of the cooking vessel (50) when the cooking vessel (50) is in a predetermined angular position on the treatment area (4).

7. The hob according to claim 3, 4 or 6, **characterised in that** said detection means and/or said control means (30) are configured for allowing a tolerance range (T) of ±10° between a real angular position and said predetermined angular position of the appendage (55) of the cooking vessel (50) with respect to the treatment area (4).

8. The hob according to any one of claims 3, 4, 6 and 7, **characterised in that** the support plate (2) comprises a first graphical indication (10) representative of the treatment area (4) and a second graphical indication (12) representative of said predetermined angular position for the appendage (55) of the cooking vessel (50) with respect to the treatment area (4).

9. The hob according to any one of the preceding claims, **characterised in that** it comprises heating means associated with the treatment area (4), and said control means (30) are further configured for modifying or stopping the operation of said heating means when the angular position change of the cooking vessel (50) is detected.

10. A cooking vessel (50) usable with a motorised cooking hob (1), of the type comprising:
a vessel wall (51) that can be supported in a treatment area (4) of a continuous glass or glass ceramic support plate (2) of said cooking hob (1), which is provided with a lower magnetic coupling member (5) rotatably arranged in said treatment area (4) below the support plate (2), and a drive motor (6) operatively connected for rotating said lower magnetic coupling member (5); and
rotary blades (53) rotatably installed inside said vessel wall (51) and connected to an upper magnetic coupling member (54),
**characterised in that** the cooking vessel (50) further comprises at least one component of detection means configured for detecting an angular position change of the cooking vessel (50) in relation to the treatment area (4) and cooperating with control means (30) for modifying or stopping the operation of said drive motor (6) when said angular position change of the cooking vessel (50) is detected.

11. The vessel according to claim 10, **characterised in that** said component of said detection means comprises a wave reflector (33) arranged in an appendage (55) of the cooking vessel (50) to reflect waves emitted from a wave emitter (31) arranged in the cooking hob (1) and redirect said waves towards a wave receiver (32) arranged in the cooking hob (1) when the cooking vessel (50) is in a predetermined angular position on the treatment area (4).

12. The vessel according to claim 10, **characterised in that** said component of said detection means comprises a wave emitter (34) arranged in an appendage (55) of the cooking vessel (50) to emit waves directed towards a wave receiver (32) located in the cooking hob (1) when the cooking vessel (50) is in a predetermined angular position on the treatment area (4).

13. The vessel according to claim 12, **characterised in that** it comprises an energy receiving device (38) configured and arranged for receiving energy wirelessly emitted by an energy emitting device (37) located in the cooking hob (1), and converting said energy received into electric current for supplying said wave emitter (34).

14. The vessel according to claim 12, **characterised in that** it comprises an energy storage device (39) configured and arranged for supplying electric current to said wave emitter (34).

15. The vessel according to claim 14, **characterised in that** it comprises a photovoltaic cell (40) exposed to light, arranged in an appendage (55) of the cooking vessel (50) and connected for charging said energy storage device (39).

16. The vessel according to claim 10, **characterised in that** said component of said detection means comprises a detectable element that can be detected by a proximity sensor arranged in the cooking hob (1) when the cooking vessel (50) is in a predetermined angular position on the treatment area (4).

17. The vessel, according to claim 16, **characterised in that** said detectable element is a permanent magnet (36) housed in an appendage (55) of the cooking vessel (50) close enough to the support plate (2) to be detected by a Hall effect sensor (35) arranged in the cooking hob (1).
